# EUROPEAN PATENT APPLICATION

(11) **EP 2 472 895 A1**
(43) Date of publication of application: **04.07.2012**
(21) Application number: 11171462.2
(22) Date of filing: 27.06.2011
(51) Int. Cl.: H04N 21/433, H04N 21/482, H04N 21/426

(54) **Electronic apparatus, data management system, and data management method**

(30) Priority: 28.12.2010 JP 2010294067
(71) Applicant: Kabushiki Kaisha Toshiba, Tokyo (JP)
(72) Inventor: Hamada, Tomo, Tokyo (JP)
(74) Representative: HOFFMANN EITLE

(57) **Abstract**

In one embodiment, there is provided an electronic apparatus. The apparatus includes: a receiver configured to receive data from at least one external storage device, the data relating to content stored in the at least one external storage device; and a display generator configured to generate a display image indicating data stored in plural storage devices based on at least the content-related data received by the receiver. The receiver is configured to receive the content-related data during a period between a boot of the electronic apparatus and reception of an instruction to generate the display image.

## Description

### 1. Field

Embodiments described herein relate to an electronic apparatus, a data management system, and a data management method.

### 2. Description of the Related Art

Electronic apparatus such as digital TV receivers are on the market which can be connected to an external storage device (e.g., HDD) and enable viewing of contents stored in the external storage device.

Among such electronic apparatus are ones which can be connected to plural external storage devices and allows the user to seamlessly view contents that are stored in or can be output from different external storage devices.

### BRIEF DESCRIPTION OF THE DRAWINGS

A general architecture that implements the various features of the invention will now be described with reference to the drawings. The drawings and the associated descriptions are provided to illustrate embodiments of the invention and not to limit the scope of the invention:
Fig. 1 is a block diagram showing the configuration of a data management system according to an embodiment and an example internal configuration of a DTV according to the embodiment;
Fig. 2 is a conceptual table showing an example meta DB (database) used in the embodiment;
Fig. 3 shows an example contents list used in the embodiment;
Fig. 4 shows an example contents search picture used in the embodiment;
Fig. 5 is a flowchart of an example process according to the embodiment which includes update of a meta DB;
Fig. 6 is a flowchart of an example process according to the embodiment of updating the meta DB; and
Fig. 7 is a flowchart of an example process according to the embodiment of displaying a contents list or a contents search picture.

### DETAiLED DESCRIPTION

According to exemplary embodiments of the present invention, there is provided an electronic apparatus. The apparatus includes: a receiver configured to receive data from at least one external storage device, the data relating to content stored in the at least one external storage device; and a display generator configured to generate a display image indicating data stored in plural storage devices based on at least the content-related data received by the receiver. The receiver is configured to receive the content-related data during a period between a boot of the electronic apparatus and reception of an instruction to generate the display image.

An embodiment will be hereinafter described with reference to the drawings.

First, the hardware configuration of a DTV (digital TV receiver) 1 as an example electronic apparatus according to the embodiment and a data management system 13 according to the embodiment will be described.

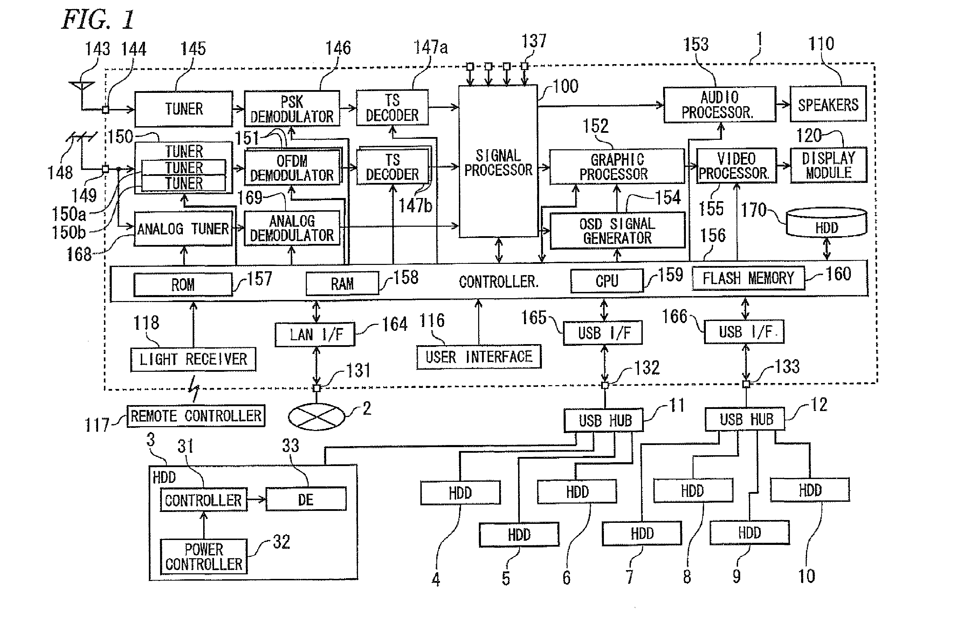

Fig. 1 is a block diagram showing the configuration of the data management system 13 according to the embodiment and an example internal configuration of the DTV I according to the embodiment.

The data management system 13 is a system which consists of the DTV 1, external HDDs (hard disk drives) 3-10, and USB hubs 11 and 12 and can manage contents stored in the external HDDs 3-10.

The DTV 1 is an example electronic apparatus according to the embodiment which can display video corresponding to a received broadcast signal on a display module 120. Although the embodiment is directed to the case that the electronic apparatus is the DTV 1, the invention is not limited to such a case. For example, the invention can also be applied to other broadcast receiving apparatus such as STBs (set-top boxes), cell phones having a broadcast receiving function, video recording apparatus incorporating a broadcast receiving apparatus, PCs (personal computers), etc.

The DTV 1 includes a controller 156 for controlling operations of its individual sections. The controller 156 incorporates a CPU (central processing unit) 159 etc. The controller 156 activates a system control program and various processing programs stored in a ROM (read-only memory) 157 in advance in response to a manipulation signal that is input through a user interface 116 or transmitted from a remote controller 117 and received by a light receiver 118. The controller 156 controls operations of the individual sections of the DTV 1 according to activated programs using a RAM (random access memory) 158 as a work memory for the CPU 159. Furthermore, the controller 156 stores information etc. necessary for various settings in a flash memory 160 (e.g., NAND flash memory) which is a nonvolatile memory.

Satellite digital TV broadcast signals received by a BS/CS digital broadcast receiving antenna 143 are supplied to a satellite digital broadcast tuner 145 via an input terminal 144. The tuner 145 tunes in to one of the received digital broadcast signals and supplies the thus-selected digital broadcast signal to a PSK (phase shift keying) demodulator 146. The PSK demodulator 146 demodulates the digital broadcast signal into a transport stream (TS) and supplies the transport stream to a TS decoder 147a. The TS decoder 147a decodes the transport stream into a digital signal containing a digital video signal, a digital audio signal, and a data signal and outputs it to a signal processor 100. The digital video signal is a digital signal relating to video that can be output by the DTV 1, and the digital audio signal is a digital signal relating to audio that can be output by the DTV 1. The data signal is a digital signal that represents various kinds of information relating to a service of the demodulated signal.

Ground-wave digital TV broadcast signals received by a ground-wave broadcast receiving antenna 148 are supplied via an input terminal 149 to a ground-wave digital broadcast tuner 150 which has two tuners, that is, a first tuner 150a and a second tuner 150b. The first tuner 150a and the second tuner 150b of the tuner 150 tune in to two of the received digital broadcast signals and supplies the thus-selected digital broadcast signals to two respective OFDM (orthogonal frequency division multiplexing) demodulators 151. The OFDM demodulators 151 demodulate the digital broadcast signals into transport streams and supplies the transport streams to two respective TS decoders 147b. The TS decoders 147b decode the transport streams into digital video signals, digital audio signals, etc. and output those signals to the signal processor 100. The ground-wave digital TV broadcast signals acquired by the first tuner 150a and the second tuner 150b of the tuner 150 can be decoded simultaneously into digital signals each containing a digital video signal, a digital audio signal, and a data signal by the two OFDM demodulators 151 and the two TS decoders 147b and then output to the signal processor 100.

The antenna 148 can also receive ground-wave analog TV broadcast signals. The received ground-wave analog TV broadcast signals are distributed by a distributor (not shown) and supplied to an analog tuner 168. The analog tuner 168 tunes into one of the received analog broadcast signals and supplies the thus-selected analog broadcast signal to an analog demodulator 169. The analog demodulator 169 demodulates the analog broadcast signal and outputs a resulting analog broadcast signal to the signal processor 100. If, for example, a CATV (cable television) tuner is connected to the input terminal 149 to which the antenna 148 is connected the DTV 1 allows the user to also view CATV broadcast programs.

The signal processor 100 performs proper signal processing on a digital signal that is output from the TS decoder 147a or 147b or the controller 156. More specifically, the signal processor 100 separates the digital signal into a digital video signal, a digital audio signal, and a data signal. The separated video signal and audio signal are output to a graphic processor 152 and an audio processor 153, respectively. Furthermore, the signal processor 100 converts a broadcast signal that is output from the analog demodulator 169 into a video signal and an audio signal having prescribed digital formats. Those digital video signal and audio signal are output to the graphic processor 152 and the audio processor 153, respectively. Still further, the signal processor 100 performs prescribed digital signal processing on an input signal that is supplied via a line input terminal 137.

An OSD (on-screen display) signal generator 154 generates, under the control of the controller 156, an OSD signal for display of a UI (user interface) picture or the like. A data signal that is separated from a digital broadcast signal by the signal processor 100 is converted by the OSD signal generator 154 into an OSD signal having a proper format, which is output to the graphic processor 152.

The graphic processor 152 decodes the digital video signal that is output from the signal processor 100. The decoded video signal is combined with (superimposed on) the OSD signal that is output from the OSD signal generator 154, and a resulting signal is output to a video processor 155. The graphic processor 152 can also select and output the decoded video signal or the OSD signal to the video processor 155.

The video processor 155 converts the output signal of the graphic processor 152 into an analog video signal having such a format as to be displayable by the display module 120. The analog video signal produced by the video processor 155 is displayed on the display module 120.

The audio processor 153 converts the received audio signal into analog audio signals having such a format as to be reproducible by speakers 110. The analog audio signals are thus output to and reproduced by the speakers 110.

A LAN terminal 131 is connected to the controller 156 via a LAN I/F (interface) 164. The LAN terminal 131 is used as a general LAN-compatible port of Ethernet (registered trademark). In the embodiment, a LAN cable is connected to the LAN terminal 131 to enable communication with the Internet 2.

USB (universal serial bus) terminals 132 and 133 are connected to the controller 156 via respective USB I/F's 156 and 166. The USB terminals 132 and 133 are used as general USB-compatible ports. A cell phone, a digital camera, a card reader/writer for any of various memory cards, an external HDD, a keyboard, etc. can be connected to each of the USB terminals 132 and 133 via a hub, for example. The controller 156 can communicate (exchange information) with each device that is connected to it via the USB terminal 132 or 133. In the embodiment, USB hubs 11 and 12 are connected to the respective USB terminal 132 and 133, and plural HDDs 3-10 are connected to the USB hubs 11 and 12.

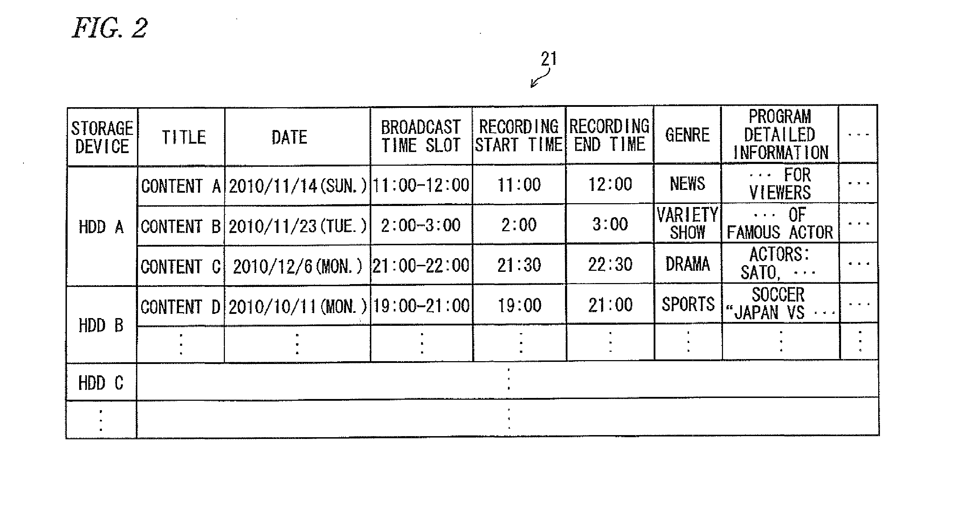

A built-in HDD 170, which is a magnetic storage medium incorporated in the DTV 1, has a function of storing various kinds of information to be held by the DTV 1. The built-in HDD 170 is stored with a meta DB (database) in which pieces of meta-information of contents stored in the built-in HDD 170 itself and the external HDDs 3-10 are registered together. The meta DB will be described later with reference to Fig. 2.

Each of the external HDDs 3-10 is a magnetic storage device which can exchange information) with the DTV 1 and is stored with plural contents and metadata relating to those contents. The term "content" means video-audio information of a TV program or the like recorded by the user. The content is not limited to video-audio information of a TV program or the like and may be video-audio information provided by a video providing company or video-audio information produced by shooting something by the user. Although the embodiment employs HDDs as example external storage devices, the invention is not limited to such a case. For example, optical disc players such as DVD (digital versatile disc) players or BD (Blu-ray (registered trademark) disc) players or semiconductor storage devices such as SSDs (solid-state drives) or SD cards may be employed as external storage devices. External HDDs connected to the DTV 1 can be registered therein. The DTV 1 acquires, from external HDDs connected to it, pieces of identification information assigned to the respective external HDDs and registers the external HDDs using the acquired pieces of identification information.

Since the external HDDs 3-10 have the same internal configuration, the internal configuration of the external HDD 3 will be described below as representative.

The external HDD 3 includes a controller 31, a power controller 32, and a DE (disk enclosure) 33.

The controller 31 has a function of controlling operations of the entire external HDD 3. Capable of communicating with the DTV 1, the controller 31 can control writing and reading of data to and from the disk of the external HDD 3 according to a request from the DTV 1.

The power controller 32 has a function of controlling power that is supplied from outside the external HDD 3. The power controller 32 supplies power to the controller 31 while the external HDD 3 is in an active state or a standby state, and does not supply power to the controller 31 while the external HDD 3 is in a power-off state.

The DE 33 is a mechanism module and has a magnetic disk and a head. Operating in a mechanical manner according to an instruction from the controller 31, the DE 33 writes or reads data to or from the magnetic disk.

The external HDD 3 has three power statuses, that is, an active state, a standby state, and a power-off state.

The active state is a state during which data writing or reading is to be performed. While the external HDD 3 is in the active state, power is supplied to both of the controller 31 and the DE 33. In the active state, the controller 31 renders the DE 33 operational by supplying the DE 33 with part of the power that is supplied from the power controller 32.

The standby state is a state during which power is supplied to the controller 31 but not to the DE 33. The controller 31 does not supply any part of the power that is supplied from the power controller 32. In this state, the external HDD 3 can stand by for a request from the DTV 1.

The power-off state is a state during which neither the controller 31 nor the DE is supplied with power.

Therefore, among the three power statuses, the active state in which power is supplied to both the controller 31 and the DE 33 is highest in power consumption. Further, the standby state and the power-off state are medium and lowest in power consumption, respectively. In the active state during which the DE 33 performs mechanical operations, the power consumption is much higher than in the standby state.

Each of the USB hubs 11 and 12 is a USB hub to which four external HDDs can be connected.

Next, the above-mentioned meta DB will be described with reference to Fig. 2.

Fig. 2 is a conceptual table showing an example meta DB (database) 21 used in the embodiment.

As mentioned above, the built-in HDD 170 of the DTV 1 is stored with a meta DB 21 in which pieces of meta information about content stored in the built-in HDD 170 itself and the external HDDs 3-10 are registered together.

Each piece of content and the meta information relating to it are registered in the meta DB 21 so as to be correlated with each other. In the meta DB 21 shown in Fig. 2, information indicating a content storage HDD, a content title, a date, a program broadcast time slot, a recording start time, a recording end time, a genre, program detailed information, etc. are correlated with each other.

The above pieces of information are just example items of information to be registered in the meta DB 21. Other example items of information to be registered in the meta DB 21 are HD/SD information, an aspect ratio, archive information, and information indicating whether recording has been completed normally or terminated abnormally. The items of information to be registered in the meta DB 21 may include information that can be acquired from SI (service information) contained in a data signal that is obtained by decoding a transport stream during, for example, recording of a program.

The pieces of information of the contents stored in the built-in HDD 170 and the external HDDs 3-10 are registered in the meta DB 21. Using these pieces of information of the content, the user can see a content list or perform a content search, transversely with respect to the external HDDs 3-10.

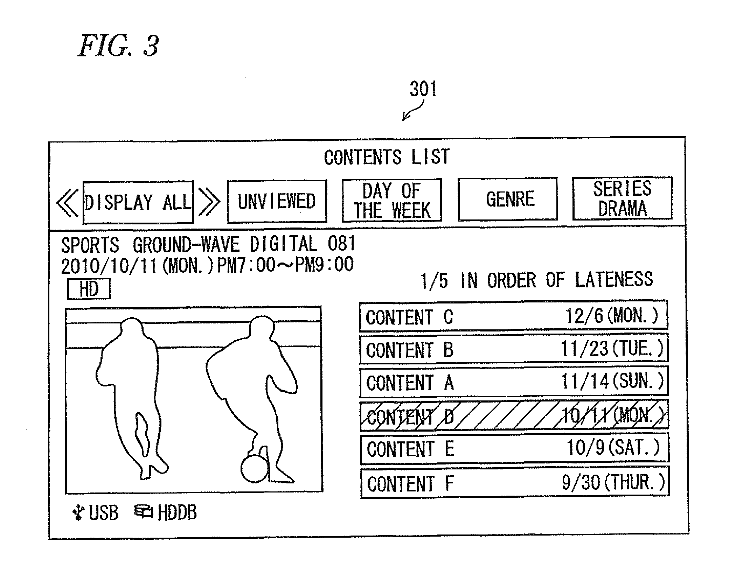

Fig. 3 shows an example contents list 301 used in the embodiment.

The DTV 1 can generate a contents list on the basis of the pieces of information) registered in the meta DB 21 and display it. When receiving an instruction to display a content list from the user, the controller 156 acquires the pieces of information from the meta DB 21 which is stored in the built-in HDD 170, generates an image of a contents list 301, and displays it on the display module 120. The pieces of information of the content stored in the built-in HDD 170 and the external HDDs 3-10, which are connected to the DTV 1 via the USB hubs 11 and 12, are registered in the meta DB 21, and the user can recognize the contents stored in the HDDs 170 and 3-10 using the contents list 301, seamlessly with respect to the HDDs 170 and 3-10.

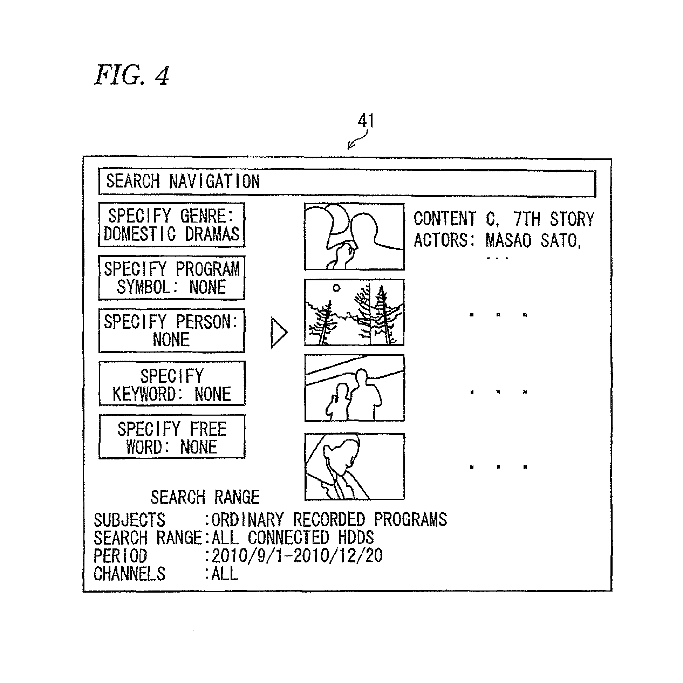

Fig. 4 shows an example contents search picture 41 used in the embodiment.

The controller 156 can generate a contents search picture 41 on the basis of the pieces of information registered in the meta DB 21 and display it. When receiving an instruction to display a content search picture from the user, the controller 156 acquires the pieces of information of the content from the meta DB 21. which is stored in the built-in HDD 170, generates an image of a contents search picture 41, and displays it on the display module 120. Furthermore, according to an instruction from the user, the controller 156 can perform a contents search by referring to the meta DB 21 (the contents stored in the built-in HDD 170 and the external HDDs 3-10, which are connected to the DTV 1 via the USB hubs 11 and 12 are searched), seamlessly with respect to the HDDs 170 and 3-10.

Next, a processing including updating of the meta DB 21 will be described.

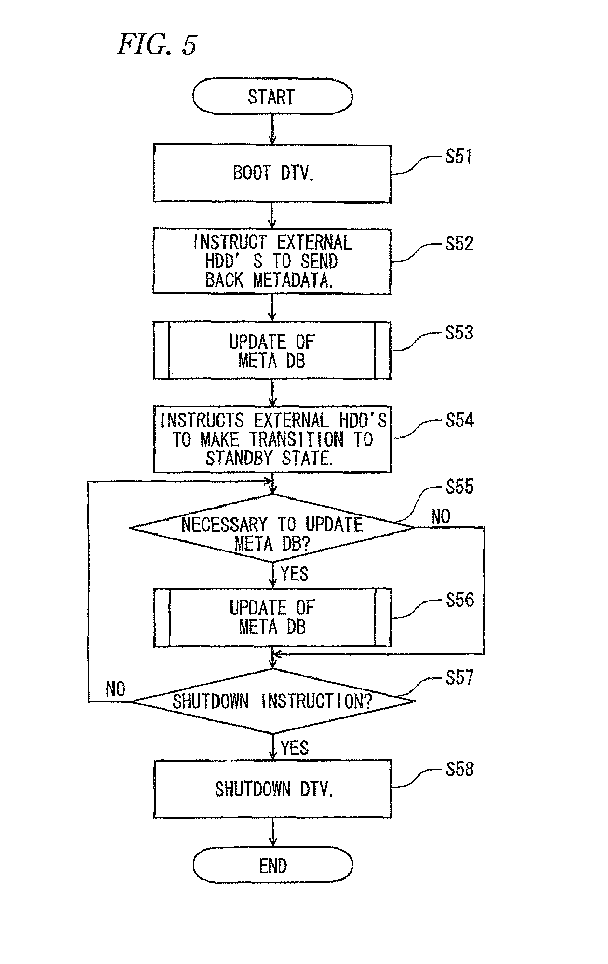

Fig. 5 is a flowchart of an example process according to the embodiment which includes update of the meta DB 21.

Upon a boot of the DTV 1 (step S51), at step S52 the controller 156 instructs the external HDDs 3-10 to send, to the DTV 1, metadata of contents stored therein. The controller 156 may either instruct the external HDDs 3-10 simultaneously to send back metadata or instruct the external HDDs 3-10 sequentially at prescribed intervals to send back metadata. In the latter case, for example, the controller 156 may send an instruction signal to a second external HDD after a lapse of about 10 seconds from sending of a first instruction signal to a first external HDD. In this case, the external HDDs 3-10 start spinning up at different time points, which prevent an event that they consume large power together as a whole as well as a problem that simultaneous spin-up of the external HDDs 3-10 is noisy.

When receiving such an instruction, each of the external HDDs 3-10 makes a transition from a standby state to an active state. The metadata of all the contents stored therein are read out and sent to the DTV 1. A transition from a standby state to an active state of an external HDD is also called "spin up." Each of the external HDDs 3-10 may have a meta DB in which the metadata of the contents stored therein are registered together. In this case, each of the external HDDs 3-10 may either send the entire meta DB to the DTV 1 or information that is a difference from a meta DB that was sent last time. Sending only difference information is advantageous in that the amount of transmission data can be reduced.

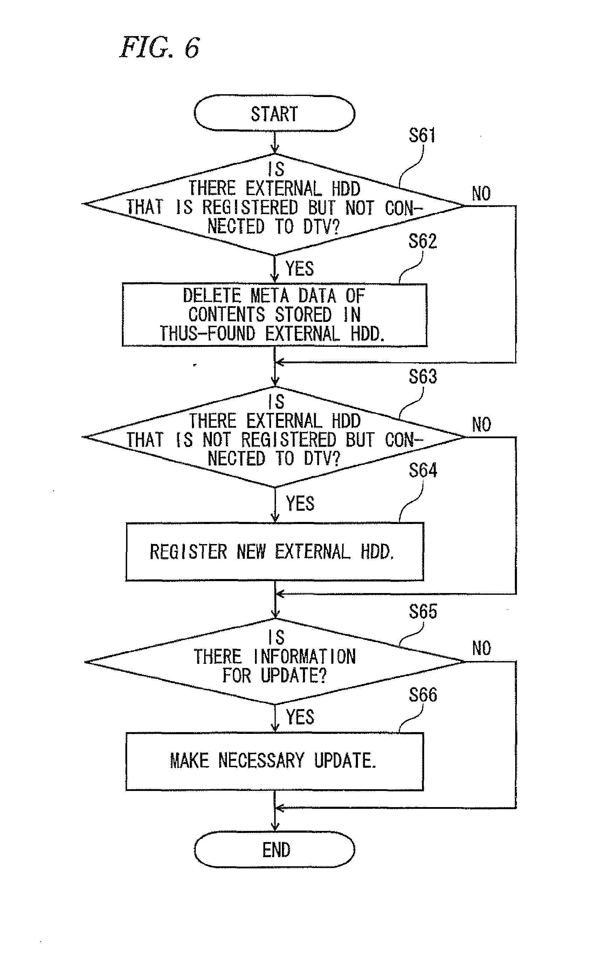

At step S53, the controller 156 updates the meta DB 21 on the basis of the metadata received from the external HDDs 3-10. A detailed process of the update of the meta DB 21 will be described later with reference to Fig. 6.

At step S54, the controller 156 instructs all the external HDDs 3-10 connected to the DTV 1 to make a transition to a standby state. A transition from an active state to a standby state of an external HDD is also called "spin down."

At step S55, the controller 156 judges whether update of the meta DB 21 is necessary or not. This judgment is made by, for example, judging whether part of the external HDDs 3-10 have been disconnected or not, a new external HDD has been connected or not, and the recorded contents of part of the external HDDs 3-10 have been changed because of, for example, recording of a broadcast program(s). If part of the external HDDs 3-10 have been disconnected, a new external HDD has been connected, or the recorded contents of part of the external HDDs 3-10 have been changed (S55: yes), at step S56 the controller 156 updates the meta DB 21.

If it is not necessary to update the meta DB 21 (S55: no) or when the meta DB has been updated at step S56, the controller 156 judges at step S57 whether or not a shutdown instruction has been received from the user.

If no shutdown instruction has been received from the user (S57: no), the process returns to step S55. If a shutdown instruction has been received from the user (S57: yes), the controller 156 shuts down the DTV 1 at step S58.

Then, the process of Fig. 5 is finished.

Next, the process of updating the meta DB 21 (each of steps S53 and S56 of the process of Fig. 5) will be described.

Fig. 6 is a flowchart of an example process according to the embodiment of updating the meta DB 21.

First, at step S61, the controller 156 checks the pieces of registration information of the external HDDs 3-10 and judges whether or not there exists an external HDD that is registered but not connected to the DTV 1.

If there exists an external HDD that is registered but not connected to the DTV 1 (S61: yes), at step S62 the controller 156 deletes, from the meta DB 21, the metadata of the contents that are stored in this external HDD because the user cannot view these contents at present If the metadata of the contents that are stored in this external HDD were left registered in the meta DB 21, contents that the user cannot view would also be displayed when a list display, a search display, or the like is made. This is the reason why in the embodiment, the metadata of the contents that are stored in a non-connected external HDD are deleted from the meta DB 21. However, the invention is not limited to such a case. For example, the metadata of the contents that are stored in a non-connected external HDD may be invalidated so as not to be displayed when a list display, a search display, or the like is made. This may be done by setting an invalid flag for each of those pieces of metadata in the meta DB 21. In this case, in making a list display, a search display, or the like, the controller 156 refrains from selecting those contents as part of a list or employing them as part of search subjects.

If there is no external HDD that is registered but not connected to the DTV 1 (S61: no) or when step S62 has been executed, the controller 156 judges at step S63 whether or not there exists an external HDD that is not registered but is connected to the DTV 1.

If there exists an external HDD that is not registered but is connected to the DTV 1 (S63: yes), at step S64 the controller 156 registers this external HDD. Although not shown in any drawing, first the controller 156 makes, for example, a pop-up display for prompting the user to make a decision as to whether to register this external HDD. If the user allows registration of this external HDD through the pop-up display, the controller 156 registers this external HDD. If not, the controller 156 does not register this external HDD and the process moves to step S65.

If there is no external HDD that is not registered but connected to the DTV 1 (S63: no) or when the external HDD has been registered at step S64, the controller 156 judges at step S65 whether or not there exists information for update. For example, in the case of step S53 shown in Fig. 5, the controller 156 compares metadata acquired from the external HDDs 3-10 connected to the DTV 1 with the meta DB 21 of the DTV 1 and judges whether or not there exists a difference(s). In the case of step S56 shown in Fig. 5, the controller 156 judges whether or not the metadata stored in the built-in HDD or an external HDD have changed because of, for example, addition of a content by recording or deletion of recorded content. If a difference is found (in the case of step S53) or a change is found (in the case of step S56), the controller 156 judges that there exists information to be updated (S65: yes), and makes necessary updates at step S66.

If there is no information for update (S65: no) or when step S66 has been executed, the update process is finished.

Next, a description of a process of displaying a contents list 301 or a contents search picture 41.

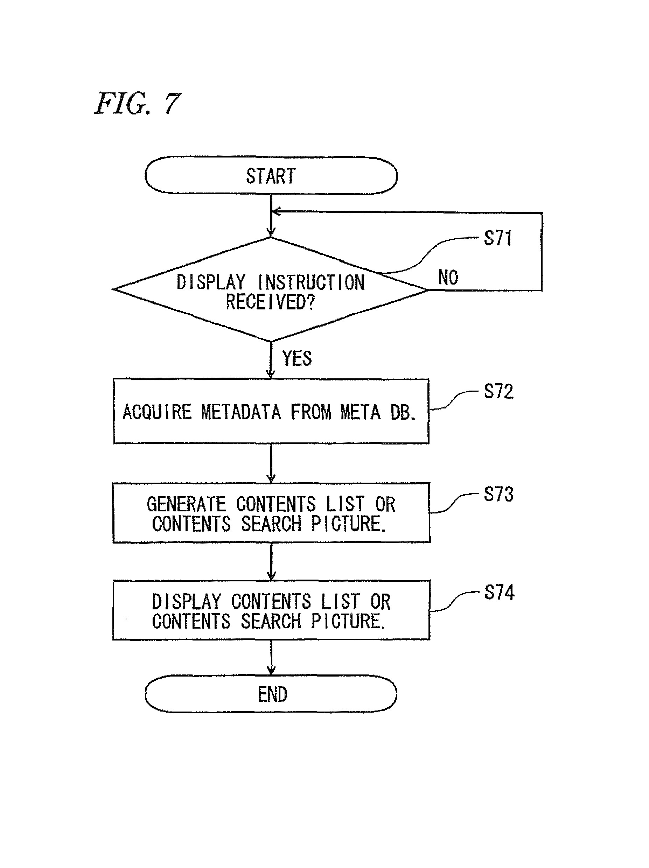

Fig. 7 is a flowchart of an example process according to the embodiment of displaying a contents list 301 or a contents search picture 41.

First, at step S71, the controller 156 judges whether or not an instruction to display a contents list or a contents search picture has been received from the user. If it is judged at step S71 that no such instruction has been received (S71: no), the controller 156 waits until reception of such an instruction.

If an instruction to display a contents list or a contents search picture has been received from the user (S71: yes), at step S72 the controller 156 acquires the metadata from the meta DB 21, which is stored in the built-in HDD 170. The controller 156 generates a contents list 301 or a contents search picture 41 on the basis of the acquired metadata at step S73, and displays it on the display module 120 at step S74.

Then, this process is finished.

In the embodiment, the meta DB 21 is updated upon a boot of the DTV 1 and again updated when it has become necessary to change the contents of the meta DB 21. As a result, the information of the meta DB 21, which is stored in the DTV 1 is always kept in a latest state while the DTV 1 is in operation. If the meta DB 21 were not updated upon a boot of the DTV 1, the following problem would arise. If the content of an external HDD is updated while the DTV 1 is off, new information is not reflected in the meta DB 21 after a boot of the DTV 1. Therefore, in generating a contents list 301 or a contents search picture 41, it is uncertain whether the meta DB 21 is in a latest state. Therefore, to display the latest information, it is necessary to cause all the external HDDs 3-10 to spin up (render them active) and acquire information (metadata) from them. As a result, all the external HDDs 3-10 consume large power together and cause a noise sound problem when a contents list 301 or a contents search picture 41 is generated.

ln the embodiment, the meta DB 21 relating to the external HDDs 3-10 is allays kept in a latest state while the DTV 1 is in operation. Therefore, it is not necessary to cause all the external HDDs 3-10 to spin up in generating a contents list 301 or a contents search picture 41 (see Fig. 7), whereby the power consumption and the noise sound can be reduced. Furthermore, since it is not necessary to access any of the external HDDs 3-10, processing of generating a contents list 301 or a contents search picture 41 can be performed at high speed.

Where as in the embodiment the external devices registered in the meta DB 21 is external HDDs, the controller 156 can recognize update statuses of data relating to the contents stored in the external HDDs. However, for example, where data relating to the contents stored in a NAS (network attached storage) on a network that is connected to the DTV 1 via an Ethernet (registered trademark) are registered in the meta DB 12, it is difficult for the controller 156 to recognize update statuses of that data, In this case, step S72 in Fig. 7 may be executed in such a manner that the controller 156 instructs the NAS to send back metadata of the contents stored therein while not giving such an instruction to USB-connected external HDDs. With this measure, the latest data can be displayed at step S74 because metadata is received from the NAS for which it was uncertain whether or not the latest metadata was registered in the meta DB 21.

For example, among electronic apparatus, such as the DTV 1, are some automatically render external storage devices such as external HDDs active as soon as they are booted. Such electronic apparatus can update the meta DB 21 utilizing the transitions of the external HDDs to active states. This also contributes to the reduction of power consumptions.

Although in the embodiment the meta DB 21 is stored in the built-in HDD 170, the invention is not limited to such a case. The meta DB 21 may be stored in the flash memory 160.

While certain embodiments have been described, these embodiments have been presented by way of example only, and are not intended to limit the scope of the invention. Indeed, the novel methods and systems described herein may be embodied in a variety of other forms. Furthermore, various omissions, substitutions and changes in the form of the methods and systems described herein may be made without departing from the sprit of the invention. The accompanying claims and their equivalents are intended to cover such forms or modifications as would fall within the scope and sprit of the invention.

## Claims

1. An electronic apparatus comprising:
a receiver configured to receive data from at least one external storage device, the data relating to content stored in the at least one external storage device; and
a display generator configured to generate a display image indicating data stored in plural storage devices based on at least the content-related data received by the receiver,
wherein the receiver is configured to receive the content-related data during a period between a boot of the electronic apparatus and reception of an instruction to generate the display image.

2. The apparatus of claim 1, further comprising:
an updating module configured to update the data received by the receiver if additional content is added to an external storage device or if content is deleted from the content stored in an external storage device, so that data regarding the added or deleted content is reflected in an updated collection of data.

3. The apparatus of claim 2,
wherein the display generator is configured to generate a search display image through which to search the content corresponding to the updated collection of data that reflects the data of the added or deleted content or a collection of data that does not reflect the data of the added or deleted content.

4. The apparatus of claim 2 or 3, wherein the display generator is configured to generate a list display image indicating the content corresponding to the updated collection of data that reflects the data of the added or deleted content or a collection of data that does not reflect the data of the added or deleted content.

5. The apparatus of one of claims 1 to 4, wherein the receiver is configured to receive data relating to content stored in each of plural external storage devices.

6. The apparatus claim 2 or a claim dependent on claim 2, wherein the receiver is configured to update a database of data relating to content stored in the at least one external storage device.

7. The apparatus of one of claim 1 to 6, further comprising:
a display configured to display the display image generated by the display generator.

8. A data management system comprising:
an electronic apparatus according to one of claims 1 to 7, and;
at least one storage device provided outside the electronic apparatus;
wherein the receiver is configured to receive data from the at least one storage device.

9. A data management method comprising:
receiving data from at least one external storage device, the data relating to content stored in the at least one external storage device; and
generating a display image indicating data stored in plural storage devices based on at least the received content-related data,
wherein the content-related data is received during a period between a boot of the electronic apparatus and reception of an instruction to generate the display image.
